# EUROPÄISCHE PATENTANMELDUNG

(11) **EP 2 236 032 A2**
(43) Veröffentlichungstag der Anmeldung: **06.10.2010**
(21) Anmeldenummer: 10003037.8
(22) Anmeldetag: 05.07.1993
(51) Int. Cl.: A01N 43/82, A01N 43/78, A01N 43/76, A01N 47/36, A01N 47/30, A01N 43/70, A01N 43/50, A01N 43/40, A01N 37/48, A01N 33/18

(54) **Herbizide Mittel auf Basis von Heteroaryloxyacetamiden**

(30) Priorität: 16.07.1992 DE 4223465
(62) Teilanmeldung aus: 05024751.9
(71) Anmelder: Bayer CropScience AG, 40789 Monheim (DE)
(72) Erfinder: Santel, Hans-Joachim, Dr., 51371 Leverkusen (DE); Feucht, Dieter, Dr., 65760 Eschborn (DE)

(57) **Zusammenfassung**

Die neuen herbiziden Wirkstoffkombinationen bestehend aus
(1) einem Heteroaryloxyacetamid der allgemeinen Formel (I), 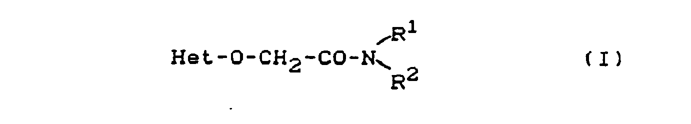 worin Het, R¹ und R² die in der Beschreibung genannten Bedeutungen haben (= Wirkstoffe der Gruppe 1) und
(2) einem bekannten herbiziden Wirkstoff aus der Gruppe 2, welche die Stoffklassen der Phenyl- und Benzthiazolylharnstoffe, Dinitroaniline, Triazine, Sulfonylharnstoffe, Imidazolinone und Diphenylether umfaßt,
zeigen bei bestimmten Gewichtsverhältnissen synergistische Wirkungen und können als Selektivherbizide in verschiedenen Nutzpflanzenkulturen (z.B. Weizen, Gerste, Mais) eingesetzt werden.

Beispielhaft sind synergistische Wirkstoffkombinationen aus (5-Trifluormethyl-1,3,4-thiadiazol-2-yl-oxy)-essigsäure-N-isopropyl-N-(4-fluorphenyl)-amid und Isoproturon oder Methabenzthiazuron zu nennen.

## Beschreibung

Die Erfindung betrifft neue herbizide, synergistische Wirkstoffkombinationen, die aus bekannten Heteroaryloxyacetamiden einerseits und weiteren bekannten, zu anderen Stoffklassen gehörenden Herbiziden andererseits bestehen und mit besonderem Vorteil zur selektiven Unkrautbekämpfung in verschiedenen Nutzpflanzenkulturen verwendet werden können.

In den nachfolgend genannten Patentschriften werden Heteroaryloxyacetamide beschrieben, die bevorzugt gegen monokotyle Unkräuter (= Ungräser), zusätzlich aber auch gegen einige dikotyle Unkräuter wirken. Sie zeigen praktisch ausschließlich Bodenwirkung und nur geringe Wirkung über das Blatt und besitzen zum Teil eine hohe Selektivität in mono- und dikotylen Kulturpflanzen wie Getreide, Mais, Reis, Soja und Baumwolle [vergl. z.B. EP-A 5 501 (= US- A 4 509 971 und US-A 4 833 243); EP-A 18 497 (= US-A 4 645 525 und US-A 4 756 741); EP-A 29 171 (= US-A 4 408 055); EP-A 94 514 (= US-A 4 585 471); EP-A 100 044 (= US-A 4 549 899); EP-A 100 045 (= US 4 540 430): EP-A 161 602 (= US-A 4 784 682); EP-A 195 237 (= US-A 4 788 291); DE-A 3 724 467; EP-A 348 734 (= US-A 4 988 380); EP-A 348 737 (= US-A 4 968 342 und 5 090 991): DE-A 4 113 421 und DE-A 4 137 827; ferner WO 91/06544].

Überraschenderweise wurde nun in biologischen Versuchen eine Reihe von bekannten herbiziden Wirkstoffen aus den Stoffklassen der Phenyl- und Benzthiazolyl-harnstoffe, Imidazolinone und Diphenylether gefunden, die bei gemeinsamer Anwendung mit den vorgenannten Heteroaryloxyacetamiden ausgesprochen synergistische Eigenschaften hinsichtlich der Effektivität gegen Unkräuter aufweisen und mit besonderem Vorteil. d.h. als breit wirksame Kombinationspräparate, zur selektiven Unkrautbekämpfung - sowohl von monokotylen wie auch von dikotylen Unkräutern, im Vorauflauf- und Nachauflaufverfahren -in monokotylen und dikotylen Nutzpflanzenkulturen, wie beispielsweise Mais, Weizen,

Gerste, Reis, Soja, Baumwolle, Rüben und Erdnüsse, verwendet werden können, wobei eine Reihe wirtschaftlich wichtiger (Problem-)Unkräuter und Ungräser sicher bekämpft werden kann.

Gegenstand der vorliegenden Erfindung sind herbizide synergistische Mittel, gekennzeichnet durch einen wirksamen Gehalt an einer Wirkstoffkombination bestehend aus
(1) einem Heteroaryloxyacetamid der allgemeinen Formel (I) 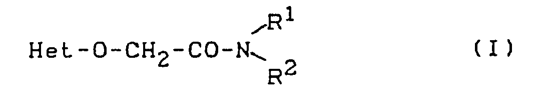 worin
   - Het: für einen gegebenenfalls substituierten he- teroaromatischen Rest aus der Reihe 1,3-Thia- zol-2-yl, 1,2,4-Thiadiazol-2-yl, 1,3,4-Thia- diazol-2-yl, Benzoxazol-2-yl und Benzthiazol- 2-yl steht,
   - R¹: für jeweils gegebenenfalls substituiertes C₁-C₄-Alkyl, C₃-C₄-Alkenyl oder C₁-C₄-Alkoxy steht,
   - R²: für jeweils gegebenenfalls substituiertes C₁-C₄-Alkyl, C₃-C₄-Alkenyl oder Phenyl steht,
   (= Wirkstoffe der Gruppe 1) und
(2) einem bekannten herbiziden Wirkstoff aus der Gruppe 2, welche die nachfolgend genannten Verbindungsklassen (a) bis (i) enthält:
   (a) N-Phenylharnstoffe, wie z.B. 3-(4-Isopropylphenyl)-1,1-dimethylharnstoff (ISOPROTURON), 3-(3-Chlor-4-methylphenyl)-1,1-dimethylharnstoff (CHLORTOLURON), 3-(3,4-Dichlorphenyl)-1,1-dimethylharnstoff (DIURON), 3-(4-Chlorphenyl)-1,1-dimethylharnstoff (MONURON), 3-(3,4-Dichlorphenyl)-1-methoxy-1-methylharnstoff (LINURON), 3-(4-Chlorphenyl)-1-methoxy-1-methyl-harnstoff (MONOLINURON) oder 3-(3-Trifluormethyl-phenyl)-1,1-dimethylharnstoff (FLUOMETURON);
   (b) N-Benzthiazolyl-harnstoffe, wie z.B. 3-(Benzthiazol-2-yl)-1,3-dimethyl-harnstoff (METHABENZTHIAZURON);
   (c) 2,6-Dinitroaniline, wie z.B. N,N-Di-(n-propyl)-2,6-dinitro-4-trifluormethyl-anilin (TRIFLURALIN) oder N-(1-Ethylpropyl)-3,4-dimethyl-2,6-dinitroanilin (PENDIMETHALIN);
   (d) s-Triazine, wie z.B. 2-Chlor-4-ethylamino-6-isopropylamino-s-triazin (ATRAZIN), 2-Chlor-4-(1-cyano-1-methylethylamino)-6-ethylamino-s-triazin (CYANAZIN), 2-Chlor-4-ethylamino-6-tert.butylamino-s-triazin (TERBUTHYLAZIN), 2-Ethylamino-4-methylthio-6-tert,butylamino-s-triazin (TERBUTRYN) oder 2-Chlor-4,6-bis-(ethylamino)-s-triazin (SIMAZIN);
   (f) Sulfonylharnstoffe, wie z.B. 3-(4-Methoxy-6-methyl-1,3,5-triazin-2-yl)-1-(2-chlorphenyl)-sulfonylharnstoff (CHLORSULFURON), 3-(4-Methoxy-6-methyl-1,3,5-triazin-2-yl)-1-(2-methoxycarbonyl-phenyl)-sulfonylharnstoff (METSULFURON), 3-(4-Methoxy-6-methyl-1,3,5-triazin-2-yl)-1-(2-methoxycarbonyl-thien-3-yl)-sulfonylharnstoff (THIFENSULFURON), 3-(4-Methoxy-6-methyl-1,3,5-triazin-2-yl)-3-methyl-1-(2-methoxycarbonyl-phenyl)-sulfonylharnstoff (TRIBENURON); 3-(4,6-Dimethoxy-pyrimidin-2-yl)-1-(2-methoxycarbonyl-benzyl)-sulfonylharnstoff (BENSULFURON), 3-(4-Chlor-6-methoxypyrimidin-2-yl)-1-(2-ethoxycarbonyl-phenyl)-sulfonylharnstoff (CHLORIMURON), 3-(4,6-Dimethoxy-pyrimidin-2-yl)-1-(3-dimethylaminopyridin-2-yl)-sulfonylharnstoff (NICOSULFURON), 3-(4-Methoxy-6-methyl-1,3,5-triazin-2-yl)-1-[2-(2-chlorethoxy)-phenyl]-sulfonylharnstoff (TRIASULFURON), 3-[4,6-Bis-(difluormethoxy)-pyrimidin-2-yl]-1-(2-methoxycarbonylphenyl)-sulfonylharnstoff (PRIMISULFURON) oder 3-(4,6-Dimethoxy-pyrimidin-2-yl)-1-(N-methyl-N-methylsulfonyl-amino)-sulfonylharnstoff (AMIDOSULFURON);
   (g) Imidazolinone, wie z.B. 2-[4,5-Dihydro-4-methyl-4-(1-methylethyl)-5-oxo-1H-imidazol-2-yl]-3-chinolincarbonsäure (IMAZAQUIN), 2-[4,5-Dihydro-4-methyl-4-(1-methylethyl)-5-oxo-1H-imidazol-2-yl]-3-pyridincarbonsäure (IMAZAPYR) oder 2-[4,5-Dihydro-4-methyl-4-(1-methylethyl)-5-oxo-1H-imidazol-2-yl]-methyl-benzoesäuremethylester (IMAZAMETHABENZ);
      und
   (i) Diphenylether, wie z.B. 2,4-Dichlorphenyl-3'-methoxycarbonyl-4'-nitro-phenylether (BIFENOX), 5-(2-Chlor-4-trifluormethyl-phenoxy)-2-nitro-benzoesäure (ACIFLUORFEN), [1-(Ethoxycarbonyl)-ethyl]-5-[2'-chlor-4'-trifluormethyl-phenoxy]-2-nitrobenzoat (LACTOFEN) oder 5-(2-Chlor-4-trifluormethyl-phenoxy)-N-methylsulfonyl-2-nitro-benzamid (FOMESAFEN);
   (= Wirkstoffe der Gruppe 2), wobei im allgemeinen auf 1 Gewichtsteil Wirkstoff der Gruppe (1) (d.h. der Formel (I)) 0,001 bis 1000 Gewichtsteile Wirkstoff der Gruppe (2) entfallen.

Von besonderem Interesse sind erfindungsgemäße herbizide Mittel mit Verbindungen der genannten Formel (I), worin
- Het: für einen gegebenenfalls substituierten 1,3,4- Thiadiazol-2-yl-Rest,
- R¹: für C₁-C₄-Alkyl und
- R²: für gegebenenfalls substituiertes Phenyl steht,
in Kombination mit einem N-Phenylharnstoff oder einem N-Benzthiazolylharnstoff.

Ganz besonders bevorzugte erfindungsgemäße herbizide Mittel enthalten als Verbindung der Formel (I)

(5-Trifluormethyl-1,3,4-thiadiazol-2-yl-oxy)-essigsäure-N-isopropyl-N-(4-fluorphenyl)-amid der Formel (I-1) 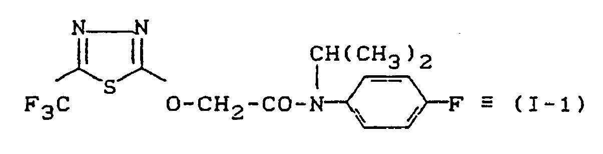 in Kombination mit

| | |
|---|---|
| ISOPROTURON | = (IPU) oder |
| METHABENZTHIAZURON | = (MBT). |

Die Verbindung der Formel (I-1) ist bekannt, z.B. aus EP-A 348 737 und US-A 4 968 342. Die übrigen Wirkstoffe der allgemeinen Formel (I) sind in den eingangs zitierten Patentanmeldungen beziehungsweise Patentschriften beschrieben.

Die Wirkstoffe der Gruppe (2) sind beschrieben in "The Pesticide Manual", British Crop Protection Council, 8th Edition (1987): z.B. Seiten 491 bis 492 (ISOPROTURON), Seite 538 (METHABENZTHIAZURON), Seiten 573 bis 574 (METRIBUZIN).

Die unter Gruppe (1) definierten Heteroaryloxyacetamide der Formel (I) wirken bevorzugt gegen monokotyle Unkräuter (= Ungräser), wirken aber auch zusätzlich gegen einige dikotyle Unkräuter.

Die unter Gruppe (2) aufgeführten Wirkstoffe können zur selektiven Bekämpfung eines breiten Spektrums von Unkräutern und Ungräsern in wirtschaftlich wichtigen Kulturen wie z.B. Getreide, Mais, Soja, Baumwolle, Rüben und Reis eingesetzt werden. Jedoch ist ihre Wirkung gegen bestimmte mono- und dikotyle Schadpflanzen nicht immer ausreichend. Wichtige Problemunkräuter wie beispielsweise Galium aparine oder Lolium-Arten werden häufig nur unzureichend erfaßt.

Es wurde nun überraschend gefunden, daß die oben definierten Wirkstoffkombinationen aus den Heteroaryloxyacetamiden der Formel (I) beziehungsweise Gruppe (1) und den unter Gruppe (2) genannten Wirkstoffen eine besonders hohe Wirksamkeit aufweisen und in vielen Kulturen selektiv anwendbar sind.

Überraschenderweise ist die herbizide Wirksamkeit der erfindungsgemäßen Wirkstoffkombination wesentlich höher als die Summe der Wirkungen der einzelnen Wirkstoffe.

Es liegt somit ein nicht vorhersehbarer echter synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter wie Galium aparine und Lolium-Arten gut bekämpfen. Die neuen Wirkstoffkombinationen stellen somit eine wertvolle Bereicherung der Selektivherbizide dar.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centäurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.
Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Gruppe (1) Formel (I) 0,001 bis 1000 Gewichtsteile, vorzugsweise 0,01 bis 100 Gewichtsteile und besonders bevorzugt 0,1 bis 30 Gewichtsteile Wirkstoff der Gruppe (2).

Die Wirkstoffe beziehungsweise Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflaufverfahren, kann es ferner vorteilhaft sein, in die Formulierungen als weitere Zusatzstoffe pflanzenverträgliche mineralische oder vegetabilische Öle (z.B. das Handelspräparat "Oleo Dupont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,01 und 10 kg pro ha, vorzugsweise zwischen 0,05 und 5 kg pro ha, besonders bevorzugt zwischen 0,1 und 3,0 kg pro ha.

Die erfindungsgemäßen Wirkstoffkombinationen können vor und nach dem Auflaufen der Pflanzen appliziert werden, also im Vorauflauf und Nachauflauf-Verfahren.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.; "Calculating synergistic and antagonistic responses of herbicide combinations", Weeds 15, Seiten 20 - 22, 1967): Wenn
- X = %: Schädigung durch Herbizid A (Wirkstoff der Gruppe 1) bei p kg/ha Aufwandmenge und
- Y = %: Schädigung durch Herbizid B (Wirkstoff der Gruppe 2) bei q kg/ha Aufwandmenge und
- E =: die erwartete Schädigung der Herbizide A und B, bei p und q kg/ha Aufwandmenge,
dann ist E = X + Y - (X * Y/100).

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombinationen bei den Unkräutern größer ist als die berechnete, d.h., daß die neuen Wirkstoffkombinationen synergistisch wirken.

### Anwendungsbeispiele

Zur Herstellung der für die Versuche benötigten Wirkstoffzubereitungen werden entsprechende Mengen einer wasserdispergierbaren Pulverformulierung (WP) des Heteroaryloxyacetamids der Formel (I-1) und jeweils eine handelsübliche Formulierung des Wirkstoffs der Gruppe 2 abgewogen und mit Wasser auf die gewünschte Konzentration verdünnt; durch Mischen wurden unterschiedliche Kombinationen der beiden Wirkstoffe hergestellt.

Als METHABENZTHIAZURON-Formulierung wurde ein 70%iges WP eingesetzt (Handelsname: ®TRIBUNIL, Fa. Bayer AG.).

Als ISOPROTURON-Formulierung wurde ein 50%iges WG (wasserdispergierbares Granulat) eingesetzt (Handelsname: ®ARELON, Fa. Hoechst AG).

Die Teste wurden wie folgt durchgeführt:

### A) Vorauflauf-Teste/Gewächshaus

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach der Behandlung werden die Testpflanzen im Gewächshaus unter kontrollierten Bedingungen (Temperatur, Luftfeuchte, Licht) bis zur Auswertung gehalten. Nach 3 Wochen wird der Schädigungsgrad der Pflanzen in % Schädigung im Vergleich zur Entwicklung unbehandelter Kontrollpflanzen bonitiert.

Es bedeuten:
- 0 =: keine Wirkung/Schädigung (wie unbehandelte Kontrolle)
- 100 =: totale Vernichtung

### B) Nachauflauf-Teste/Gewächshaus

Mit den Wirkstoffzubereitungen spritzt man Testpflanzen, welche eine Höhe von 5 bis 15 cm haben, so daß die jeweils gewünschten Wirkstoffmengen pro Flächeneinheit ausgebracht werden. Die Konzentration der Spritzbrühen wird so gewählt, daß in 500 1 Wasser pro ha die jeweils gewünschten Wirkstoffmengen ausgebracht werden. Nach der Behandlung werden die Testpflanzen im Gewächshaus unter kontrollierten Bedingungen (Temperatur, Luftfeuchte, Licht) bis zur Auswertung gehalten. Nach drei Wochen wird der Schädigungsgrad der Pflanzen in % Schädigung im Vergleich zur Entwicklung unbehandelter Kontrollpflanzen bonitiert.

Es bedeuten :
- 0 =: keine Wirkung/Schädigung (wie unbehandelte Kontrolle)
- 100 =: totale Vernichtung
Wirkstoffe, Aufwandmengen und Resultate gehen jeweils aus den nachfolgenden Tabellen hervor, wobei die in den Tabellen verwendeten Abkürzungen folgenden Bedeutungen haben:
- (I-1) =: (5-Trifluormethyl-1,3,4-thiadiazol-2-yl- oxy)-essigsäure-N-isopropyl-N-(4-fluor- phenyl)-amid;
- (IPU) =: ISOPROTURON;
- (MBT) =: METHABENZTHIAZURON;
- gef. =: gefundene Schädigung beziehungsweise Wir- kung (in Prozent);
- ber. =: nach der obigen COLBY-Formel berechnete Schädigung beziehungsweise Wirkung (in Prozent).

**Tabelle A-1**

| Vorauflauf-Test/Gewächshaus | | | | | |
|---|---|---|---|---|---|
| Wirkstoff bzw. -kom- bination | Aufwandmenge g/ha (Wirkstoff) | Testpflanzen | | | |
| | | Schädigung bzw. Weizen | | Wirkung in % Galium | |
| | | gef. | ber. | gef. | ber. |
| (I-1) | 125 | 10 | | 70 | |
| -bekannt- | | | | | |
| | | | | | |
| (MBT) | 1.500 | 0 | | 20 | |
| -bekannt- | | | | | |
| | | | | | |
| (I-1)+(MBT) | 125 + 1.500 | 10 | 10 | 95 | 76 |
| -erfindungsgemäß- | | | | | |

**Tabelle A-2**

| Vorauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Weizen | | Wirkung in % Alopecurus | |
| | | gef. | ber. | gef. | ber. |
| (I-1) | 125 | 10 | | 90 | |
| -bekannt- | | | | | |
| | | | | | |
| (MBT) | 750 | 0 | | 20 | |
| -bekannt- | 1.500 | 0 | | 70 | |
| | | | | | |
| (I-1)+(MBT) | 125+ 750 | 10 | 10 | 100 | 92 |
| -erfindungsgemäß- | 125+1.500 | 10 | 10 | 100 | 97 |

**Tabelle A-3**

| Vorauflauf-Test/Gewächshaus | | | | | |
|---|---|---|---|---|---|
| Wirkstoff bzw. -kom- bination | Aufwandmenge g/ha (Wirkstoff) | Testpflanzen | | | |
| | | Schädigung bzw. Weizen | | Wirkung in % Lolium | |
| | | gef. | ber. | gef. | ber. |
| (I-1) | 125 | 10 | | 60 | |
| -bekannt- | | | | | |
| | | | | | |
| (MBT) | 1.500 | 0 | | 40 | |
| -bekannt- | | | | | |
| | | | | | |
| (I-1)+(MBT) | 125+1.500 | 10 | 10 | 90 | 76 |
| -erfindungsgemäß- | | | | | |

**Tabelle B-1**

| Nachauflauf-Test/Gewächshaus | | | | | |
|---|---|---|---|---|---|
| Wirkstoff bzw. -kom- bination | Aufwandmenge g/ha (Wirkstoff) | Testpflanzen | | | |
| | | Schädigung bzw. Gerste | | Wirkung in % Matricaria | |
| | | gef. | ber. | gef. | ber. |
| (I-1) | 125 | 30 | | 50 | |
| -bekannt- | | | | | |
| | | | | | |
| (MBT) | 125 | 0 | | 80 | |
| -bekannt- | | | | | |
| | | | | | |
| (I-1)+(MBT) | 125+125 | 0 | 30 | 100 | 90 |
| -erfindungsgemäß- | | | | | |

**Tabelle B-2**

| Nachauflauf-Test/Gewächshaus | | | | | |
|---|---|---|---|---|---|
| Wirkstoff bzw. -kom- bination | Aufwandmenge g/ha (Wirkstoff) | Testpflanzen | | | |
| | | Schädigung bzw. Weizen | | Wirkung in % Avena | |
| | | gef. | ber. | gef. | ber. |
| (I-1) | 125 | 0 | | 50 | |
| -bekannt- | | | | | |
| | | | | | |
| (MBT) | 500 | 0 | | 10 | |
| -bekannt- | 1.000 | 0 | | 30 | |
| | | | | | |
| (I-1)+(MBT) | 125+ 500 | 10 | 0 | 98 | 55 |
| -erfindungsgemäß- | 125+1.000 | 10 | 0 | 98 | 65 |

**Tabelle A-4**

| Vorauflauf-Test/Gewächshaus | | | | | |
|---|---|---|---|---|---|
| Wirkstoff bzw. -kom- bination | Aufwandmenge g/ha (Wirkstoff) | Testpflanzen | | | |
| | | Schädigung bzw. Weizen | | Wirkung in % Galium | |
| | | gef. | ber. | gef. | ber. |
| (I-1) | 125 | 10 | | 70 | |
| -bekannt- | | | | | |
| | | | | | |
| (IPU) | 500 | 0 | | 0 | |
| -bekannt- | 1.000 | 10 | | 0 | |
| | 2.000 | 10 | | 20 | |
| | | | | | |
| (I-1)+(IPU) | 125+ 500 | 0 | 10 | 80 | 70 |
| -erfindungsgemäß- | 125+1.000 | 0 | 19 | 90 | 70 |
| | 125+2.000 | 10 | 19 | 90 | 76 |

**Tabelle B-3**

| Nachauflauf-Test/Gewächshaus | | | | | |
|---|---|---|---|---|---|
| Wirkstoff bzw. -kom- bination | Aufwandmenge g/ha (Wirkstoff) | Testpflanzen | | | |
| | | Schädigung bzw. Gerste | | Wirkung in % Sinapis | |
| | | gef. | ber. | gef. | ber. |
| (I-1) | 125 | 30 | | 40 | |
| -bekannt- | | | | | |
| | | | | | |
| (IPU) | 125 | 0 | | 70 | |
| -bekannt- | | | | | |
| | | | | | |
| (I-1)+(IPU) | 125+125 | 0 | 30 | 100 | 82 |
| -erfindungsgemäß- | | | | | |

## Patentansprüche

1. Herbzide Mittel, **gekennzeichnet durch** einen Gehalt an einer Wirkstoffkombination bestehend aus
(1) einem Heteroaryloxyacetamid der allgemeinen Formel (I), 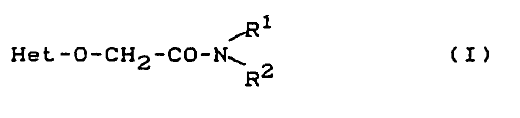 worin
Het für einen gegebenenfalls substituierten he- teroaromatischen Rest aus der Reihe 1,3- Thiazol-2-yl, 1,2,4-Thiadiazol-2-yl, 1,3,4- Thiadiazol-2-yl, Benzoxazol-2-yl und Benz- thiazol-2-yl steht,
R¹ für jeweils gegebenenfalls substituiertes C₁-C₄-Alkyl, C₃-C₄-Alkenyl oder C₁-C₄- Alkoxy steht,
R² für jeweils gegebenenfalls substituiertes C₁-C₄-Alkyl, C₃-C₄-Alkenyl oder Phenyl steht,
(= Wirkstoffe der Gruppe 1) und
(2) einem bekannten herbiziden Wirkstoff aus der Gruppe 2, welche die nachfolgend genannten Verbindungsklassen (a) bis (i) enthält:
(a) N-Phenylharnstoffe, wie z.B. 3-(4-Isopropylphenyl)-1,1-dimethylharnstoff (ISOPROTURON), 3-(3-Chlor-4-methylphenyl)-1,1-dimethylharnstoff (CHLORTOLURON), 3-(3,4-Dichlorphenyl)-1,1-dimethylharnstoff (DIURON), 3-(4-Chlorphenyl)-1,1-dimethylharnstoff (MONURON), 3-(3,4-Dichlorphenyl)-1-methoxy-1-methylharnstoff (LINURON), 3-(4-Chlorphenyl)-1-methoxy-1-methyl-harnstoff (MONOLINURON) oder 3-(3-Trifluormethyl-phenyl)-1,1-dimethylharnstoff (FLUOMETURON);
(b) N-Benzthiazolyl-harnstoffe, wie z.B. 3-(Benzthiazol-2-yl)-1,3-dimethyl-harnstoff (METHABENZTHIAZURON);
(c) 2,6-Dinitroaniline, wie z.B. N,N-Di-(n-propyl)-2,6-dinitro-4-trifluormethylanilin (TRIFLURALIN) oder N-(1-Ethylpropyl)-3,4-dimethyl-2,6-dinitroanilin (PENDIMETHALIN);
(d) s-Triazine, wie z.B. 2-Chlor-4-ethylamino-6-isopropylamino-s-triazin (ATRAZIN), 2-Chlor-4-(1-cyano-1-methylethylamino)-6-ethylamino-s-triazin (CYANAZIN), 2-Chlor-4-ethylamino-6-tert.butylamino-s-triazin (TERBUTHYLAZIN), 2-Ethylamino-4-methylthio-6-tert.butylamino-s-triazin (TERBUTRYN) oder 2-Chlor-4,6-bis-(ethylamino)-s-triazin (SIMAZIN);
(f) Sulfonylharnstoffe, wie z.B. 3-(4-Methoxy-6-methyl-1,3,5-triazin-2-yl)-1-(2-chlorphenyl)-sulfonylharnstoff (CHLORSULFURON), 3-(4-Methoxy-6-methyl-1,3,5-triazin-2-yl)-1-(2-methoxycarbonyl-phenyl)-sulfonylharnstoff (METSULFURON), 3-(4-Methoxy-6-methyl-1,3,5-triazin-2-yl)-1-(2-methoxycarbonyl-thien-3-yl)-sulfonylharnstoff (THIFENSULFURON), 3-(4-Methoxy-6-methyl-1,3,5-triazin-2-yl)-3-methyl-1-(2-methoxycarbonyl-phenyl)-sulfonylharnstoff (TRIBENURON); 3-(4,6-Dimethoxy-pyrimidin-2-yl)-1-(2-methoxycarbonyl-benzyl)-sulfonylharnstoff (BENSULFURON), 3-(4-Chlor-6-methoxy-pyrimidin-2-yl)-1-(2-ethoxycarbonyl-phenyl)-sulfonylharnstoff (CHLORIMURON), 3-(4,6-Dimethoxy-pyrimidin-2-yl)-1-(3-dimethylamino-pyridin-2-yl)-sulfonylharnstoff (NICOSULFURON), 3-(4-Methoxy-6-methyl-1,3,5-triazin-2-yl)-1-[2-(2-chlorethoxy)-phenyl]-sulfonylharnstoff (TRIASULFURON), 3-[4,6-Bis-(difluormethoxy)-pyrimidin-2-yl]-1-(2-methoxycarbonyl-phenyl)-sulfonylharnstoff (PRIMISULFURON) oder 3-(4,6-Dimethoxy-pyrimidin-2-yl)-1-(N-methyl-N-methylsulfonyl-amino)-sulfonylharnstoff (AMIDOSULFURON);
(g) Imidazolinone, wie z.B. 2-[4,5-Dihydro-4-methyl-4-(1-methylethyl)-5-oxo-1H-imidazol-2-yl]-3-chinolincarbonsäure (IMAZAQUIN), 2-[4,5-Dihydro-4-methyl-4-(1-methylethyl)-5-oxo-1H-imidazol-2-yl]-3-pyridincarbonsäure (IMAZAPYR) oder 2-[4,5-Dihydro-4-methyl-4-(1-methylethyl)-5-oxo-1H-imidazol-2-yl]-methyl-benzoesäuremethylester (IMAZAMETHABENZ);
und
(i) Diphenylether, wie z.B. 2,4-Dichlorphenyl-3'-methoxycarbonyl-4'-nitro-phenylether (BIFENOX), 5-(2-Chlor-4-trifluormethyl-phenoxy)-2-nitro-benzoesäure (ACIFLUORFEN), [1-(Ethoxycarbonyl)-ethyl]-5-[2'-chlor-4'-trifluormethylphenoxy]-2- nitrobenzoat (LACTOFEN) oder 5-(2-Chlor- 4-trifluormethyl-phenoxy)-N-methylsulfonyl-2-nitro-benzamid (FOMESAFEN);
(= Wirkstoffe der Gruppe 2), wobei im allgemeinen auf 1 Gewichtsteil Wirkstoff der Gruppe (1) (d.h. der Formel (I)) 0,001 bis 1000 Gewichtsteile Wirkstoff der Gruppe (2) entfallen.

2. Herbizide Mittel gemäß Anspruch 1, **dadurch gekennzeichnet, daß** in den Wirkstoffkombinationen das Cewichtsverhältnis von Wirkstoff der Gruppe (1) zu dem Wirkstoff der Gruppe (2) zwischen 1:0,01 und 1:100, insbesondere zwischen 1:0,1 und 1:30 liegt.

3. Herbizide Mittel gemäß Anspruch 1, **dadurch gekennzeichnet, daß** die Wirkstoffkombinationen aus einer Verbindung der Formel (I), worin
Het für einen gegebenenfalls substituierten 1,3,4- Thiadiazol-2-yl-Rest,
R¹ für C₁-c₄-Alkyl und
R² für gegebenenfalls substituierter Phenyl steht,
in Kombination mit einem N-Phenylharnstoff oder einem N-Benzthiazolylharnstoff bestehen.

4. Herbizide Mittel gemäß Anspruch 3, **dadurch gekennzeichnet, daß** die Wirkstoffkombinationen aus (5-Trifluormethyl-1,3,4-thiadiazol-2-yl-oxy)-essigsäure-N-isopropyl-N-(4-fluorphenyl)-amid der Formel (I-1) 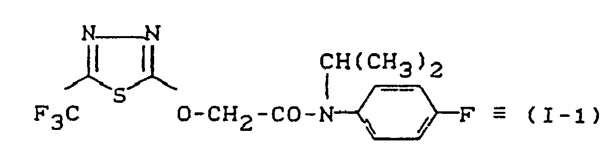 in Kombination mit
| | |
|---|---|
| ISOPROTURON | = (IPU) oder |
| METHABENZTHIAZURON | = (MBT). |
bestehen.

5. Verfahren zur Bekämpfung von Unkraut, **dadurch gekennzeichnet, daß** man eine Wirkstoffkombination gemäß Ansprüchen 1 bis 4 auf Unkraut oder seinen Lebensraum einwirken läßt.

6. Verwendung von Wirkstoffkombinationen gemäß Ansprüchen 1 bis 4 zur Bekämpfung von Unkraut.

7. Verfahren zur Herstellung von herbiziden Mitteln, **dadurch gekennzeichnet, daß** man eine Wirkstoffkombination gemäß den Ansprüchen 1 bis 4 mit Streckmitteln und/oder oberflächenaktiven Mitteln vermischt.
